# EUROPEAN PATENT SPECIFICATION

(11) **EP 1 368 722 B1**
(45) Date of publication and mention of the grant of the patent: **15.08.2007**
(21) Application number: 01980520.9
(22) Date of filing: 25.10.2001
(51) Int. Cl.: G06F 21/20

(54) **METHOD AND SYSTEM FOR WEB-BASED CROSS-DOMAIN SINGLE-SIGN-ON AUTHENTICATION**
VERFAHREN UND SYSTEM ZUR WEB-BASIERTEN CROSS-DOMAIN BERECHTIGUNG MIT EINMALIGER ANMELDUNG
PROCEDE ET SYSTEME POUR L'AUTHENTIFICATION D'UNE SIMPLE PROCEDURE D'ENTREE EN COMMUNICATION INTERDOMAINE

(30) Priority: 09.11.2000 US 710926
(43) Date of publication of application: 10.12.2003
(73) Proprietor: International Business Machines Corporation, Armonk, NY 10504 (US); IBM DEUTSCHLAND GMBH, D-70569 Stuttgart (DE)
(72) Inventor: HINTON, Heather, Maria, Austin, TX 78732 (US); WINTERS, David, John, Petrie, Queensland, 4502 (AU)
(74) Representative: Kuisma, Sirpa Tuulikki
(86) International application number: PCT/EP2001/012361
(87) International publication number: WO 2002/039237

(56) References cited:
- EP-A- 0 940 960
- "smb.conf - The configuration file for the Samba suite" UNIX MAN PAGES, [Online] 23 October 1998 (1998-10-23), XP002241870 Retrieved from the Internet: <URL:http://web.archive.org/web/2000100106 2644/http://de.samba.org/samba/docs/man/sm b.conf.5.html> [retrieved on 2003-05-20]
- MICHAEL FLEMING GRUBB ET AL: "Single Sign-On and the System Administrator" USENIX, 6 December 1998 (1998-12-06), XP002154500 Retrieved from the Internet: <URL:http://www.usenix.org/publications/li brary/proceedings/lisa98/full_pa pers/grubb/> [retrieved on 2000-12-04]
- STEINER J.G.; NEUMAN C.; SCHILLER J.I.: 'KERBEROS: AN AUTHENTICATION SERVICE FOR OPEN NETWORK SYSTEMS' PROCEEDINGS OF THE WINTER USENIX CONFERENCE 09 February 1988, pages 191 - 202, XP000671489

## Description

### BACKGROUND OF THE INVENTION

### 1. Field of the Invention

The present invention relates to an improved data processing system and, in particular, to a method and apparatus for multicomputer data transferring. Still more particularly, the present invention provides a method and apparatus for computer-to-computer authentication.

### 2. Description of Related Art

Information technology (IT) systems and the Internet have fueled the growth of the current global economy. While IT systems have significant benefits, at the same time they pose potential security threats from unauthorized third parties. Indeed, the lack of security in modern IT systems has emerged as a threat to the integrity of global computer networks.

To deal with this problem, IT systems provide a number of known services: data authentication, data confidentiality, entity authentication, authorization, etc. Data authentication typically consists of two sub-services: data integrity and data origin authentication. A data integrity service is used to convince a receiver of given data that the data was not changed during transit. Data origin authentication proves to the receiver the identity of the real sender. Data confidentiality protects against disclosure of data during transmission. Entity authentication provides the system with proof that a certain entity is who they claim to be.

Authorization is the act of determining whether an authenticated entity has the right to execute an action. Authorization and authentication thus are dual services. To be able to provide authorization, it is necessary to determine who the entity is (e.g., by entity authentication). Authorization, in general, consists of two separate stages: providing privileges (authorization credentials) to a particular entity, and the entity using these privileges in combination with access decision rules at the resource to determine if access should be granted to the entity.

It is becoming increasingly important to allow users to securely access resources in various locations. For example, an employee of a company may need to access documents or other resources from a main office and also from a local office while located at home or at a customer's premises. A Web-based browser has become the tool of choice in such scenarios because of its adaptability to multiple uses.

Through the standard Hypertext Transfer Protocol (HTTP), the browser can be used to access any HTTP-enabled server, commonly called a Web Application Server or WAS, and obtain access to a resource. Most browsers provide security through the Transport Layer Security (TLS) protocol. This protocol allows both the browser and the WAS to authenticate each other, i.e. to prove their identity to each other, and it also provides data protection, i.e. data integrity and data confidentiality, for data in transit between them.

The strongest form of authentication provided by the TLS/SSL protocol is client-side and server-side certificate authentication. Such authentication requires the client, i.e. a user at a browser, and the server, i.e. the WAS, to each have a private/public cryptographic key pair and associated certificates. Public key authentication maintains a binding between a user's identity and a public key that can only be unlocked by the associated private key, and these protocols are used to provide mutual authentication.

If the user at the client desires to access a URL on the server that can only be accessed by an authenticated and authorized user, however, there must be some process to determine authorization. SSL does not provide authorization or other security services to the Web Application Server. Therefore, although the server can be sure of the user's identity via authentication, it does not know the user's privileges, i.e. whether or not the user should have access to resources served by the WAS.

One attempt to solve the authorization problem is to pass authentication information within a cookie. As is well-known, a cookie is a data item that is set by a server to customize data to a particular user's web browser. Cookies thus provide a degree of "state" to HTTP, which is otherwise a stateless protocol. When a user of a client machine visits a web server, the server may return a cookie to the user's browser. When a cookie is set as part of a HTTP transaction, it may include the path for which the cookie is valid, the cookie's name and value, and other optional attributes, such as the cookie's expiration date. By default, the browser automatically stores the cookie data, typically without giving the user the option or knowledge of it being done. When the user revisits the server at some later point in time, the cookie is sent with the request, thereby identifying the user to the server.

Cookies can be either persistent cookies, which are stored on disk, or memory cookies, which are stored in memory. Persistent cookies reside in a client file, such as "cookies.txt", after the client browser is closed and are available during the next browser session. Memory cookies disappear when the browser is shut down. However, both types of cookies can be dangerous since both types of cookies can be stolen by malicious code, such as a JavaScript that has a Trojan horse, i.e. benign code that hides malicious code. Persistent cookies are a bigger threat because they can be stolen from the cookie file, although both types of cookies are vulnerable to theft.

Thus, the typical cookie set at a client's browser can be used to identify the user to the server, but the typical cookie introduces vulnerabilities. In some prior art solutions, authentication data is forwarded within a cookie when the client browser issues a request for a protected resource to the server that set the cookie. Such an approach, however, can be insecure because an attacker that obtains possession of the cookie might be able to gain user authorization to access the protected resource. In other words, an inappropriate implementation of a cookie might equate proof of possession with proof of identity. More insidiously, some cookie implementations also contain the username and password required by the user to authenticate into a system. This is particularly dangerous because if this information is stolen, a malicious user can authenticate to a system using "normal" means and thereby appear to be the user that is being impersonated. The malicious user can then have their own cookies set by the server.

As a consequence, these prior art schemes are highly susceptible to replay attacks wherein one who acquires the identity cookie can simply assert it to gain access to the protected resource. The use of HTTP cookies is known to be an insecure mechanism that is open to attack.

As presented briefly above, authentication and authorization may be accomplished in many ways, and as noted previously, enterprises may desire to provide authorized users with secure access to protected resources from various locations in a user-friendly manner. Although providing secure authentication mechanisms reduces the risks of unauthorized access to protected resources, the same authentication mechanisms may become barriers to interaction with the protected resources. Users generally desire the ability to jump from interacting with one application to another application without regard to the authentication barriers that protect each particular system supporting those applications.

As users get more sophisticated, they expect that computer systems coordinate their actions so that burdens on the user are reduced. These types of expectations also apply to authentication processes. A user might assume that once he or she has been authenticated by some computer system, the authentication should be valid throughout the user's working session, or at least for a particular period of time, without regard to the various computer architecture boundaries that are almost invisible to the user. Enterprises generally try to fulfill these expectations in the operational characteristics of their deployed systems, not only to placate users but also to increase user efficiency, whether the user efficiency is related to employee productivity or customer satisfaction.

The issue of efficient access to applications has become more prominent with the growth of the Internet. Web-based and Internet-based applications have now become so commonplace that when one learns of a new product or service, one assumes that the product or service will incorporate Internet functionality into the product or service. With the current computing environment in which many applications have a Web-based user interface that is accessible through a common browser, users expect more user-friendliness and low or infrequent barriers to movement from one Web-based application to another. In this context, users are coming to expect the ability to jump from interacting with an application on one Internet domain to another application on another domain without regard to the authentication barriers that protect each particular domain.

Most enterprises are deploying Internet-based systems. New applications that incorporate significant proprietary technology are only developed when an enterprise has a significantly compelling reason for doing so. In other cases, many legacy systems have been updated with functionality that adheres to open standards so that system services are widely available yet secure, such as through a browser as described above.

Although an updated legacy system may be more conveniently accessed through the Internet or through a corporate intranet, there may be justifiable reasons for not modifying certain systems. Many enterprises have legacy systems that are being maintained but not updated with new technologies. Other legacy systems are not modified but are merely provided with a functional interface through which other Web-based applications must interact.

Both newly deployed systems and legacy systems may provide user access through the Internet, and the user authentication process may be implemented in many different ways. However, even if many systems provide secure authentication through easy-to-use, Web-based interfaces, a user may still be forced to reckon with multiple authentication processes that stymie user access across a set of domains. Subjecting a user to multiple authentication processes in a given time frame may significantly affect the user's efficiency.

In EP-A-0 940 960 (Hewlett-Packard Company), "Authentication between servers", a method for avoiding re-authentication in multi-homed internet sites is provided. To overcome the problem of re-authentication it provides a method for a server wishing to direct a user to another server by returning a URI that has been signed by the first server by including a **signature in the URI. The user uses this signed URL to access** the second server. The second server can then use the signature contained in the URL to confirm that the user has come from the first server and therefore does not need to:be re-authenticated. Information can also be included in the URI and the signature used at the second server to check its integriy.
This invention avoids re-authentication, but for authenticating a user at a second server user information has to be provided within a modified URI.

In "smb.conf - The configuration file for the Samba suite" UNIX MANUAL, [Online] 23 October 1998 (1998-10-23), XP002241870 Retrieved from the Internet:
<URL:http://web.archive.org/web/20001001062644/http://de.samba .org/samba/docs/man/smb.conf.5.html>, a method of how a user registered with different user identities in different systems can be authenticated using only one user identity is provided.

As noted previously, cookies have been used in various manners to expedite user authentication within client-server systems. Even though cookies can minimize authentication barriers, albeit in generally insecure ways, a cookie is only valid within a given DNS (Domain Name System) domain. Therefore, a cookie cannot be used to transfer authentication information across domains when a user is moving across a set of domains.

Therefore, it would be advantageous to have a method and system in which user authentication throughout a distributed system could be provided without an authentication barrier for each security domain. In other words, it would be advantageous to have cross-domain, single-sign-on authentication in which a user can be authenticated into one security domain and then transfer to another security domain without having to re-authenticate to the second domain. It would be particularly advantageous to use open standards in an approach that is based entirely on legitimate uses of those open standards.

### SUMMARY OF THE INVENTION

The present invention is a method, system, apparatus, or computer program product for cross-domain, single-sign-on, authentication functionality. The methodology uses an "introductory authentication token" to introduce an already authenticated user from one domain to a new domain. This token is passed from one domain to the other domain using HTTP-redirection. This token is protected by encryption with a cryptographic key shared only between the two domains in a secure manner such that an external user cannot generate a counterfeit introductory token. An introductory token can be further protected by enabling it with a limited lifetime so that even if the token is misappropriated, it is only valid for a short period of time; hence, an unauthorized user would not be able to use or reuse the introductory token within the token's lifetime.

After a user has been introduced to a new domain, then all of the user's resource requests are authorized by the new domain based on the identity of the user as stated by the introducing domain. In other words, the introducing domain participates in the cross-domain functionality only when introducing a user to the new domain. After the introducing domain has participated in the authentication process, the new domain assumes full responsibility for any authorization processes. Each individual domain retains the responsibility for providing access control functionality within its own domain.

### BRIEF DESCRIPTION OF THE DRAWINGS

The novel features believed characteristic of the invention are set forth in the appended claims. The invention itself, further objectives, and advantages thereof, will be best understood by reference to the following detailed description when read in conjunction with the accompanying drawings, wherein:
**Figure 1A** depicts a typical network of data processing systems, each of which may implement the present invention;
**Figure 1B** illustrates a Web-based environment in which the present invention may be implemented;
**Figure 1C** is a data flow diagram illustrating a prior art process that may.be used when a client attempts to access a protected resource;
**Figure 2** is a flowchart showing a cross-domain, single-sign-on process implemented in accordance with a preferred embodiment of the present invention;
**Figure 3A** depicts a logical organization of information within a set of cross-domain, single-sign-on domains;
**Figure 3B** depicts an exemplary Web page from a cross-domain, single-sign-on domain that shows a main portion with indicators for protected or other resources within the CD-SSO domain and a border portion showing indicators for protected resources from which access can be initiated at the CD-SSO domain but which are stored and controlled by servers at other CD-SSO domains;
**Figure 3C** is an exemplary bookmark file in which some URIs of protected resources at CD-SSO domains have been bookmarked and stored; and
**Figures 4A-4B** are data flow diagrams illustrating some of the processing involved when a user moves between CD-SSO (cross-domain, single-sign-on) domains in accordance with a preferred embodiment of the present invention.

### DETAILED DESCRIPTION OF THE INVENTION

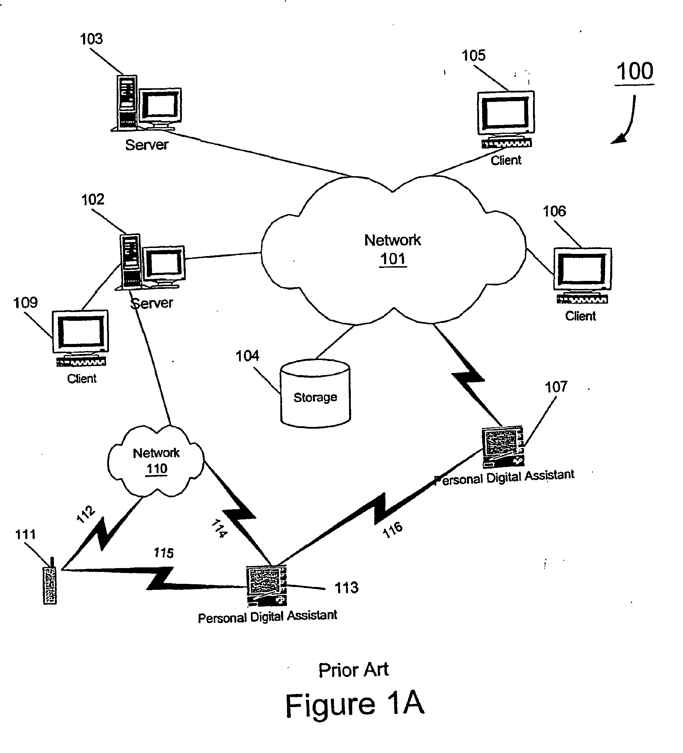

With reference now to the figures, **Figure 1A** depicts a typical network of data processing systems, each of which may implement the present invention. Distributed data processing system **100** contains network **101,** which is a medium that may be used to provide communications links between various devices and computers connected together within distributed data processing system **100.** Network **101** may include permanent connections, such as wire or fiber optic cables, or temporary connections made through telephone or wireless communications. In the depicted example, server **102** and server **103** are connected to network **101** along with storage unit **104.** In addition, clients **105-107** also are connected to network **101.** Clients **105-107** and servers **102-103** may be represented by a variety of computing devices, such as mainframes, personal computers, personal digital assistants (PDAs), etc. Distributed data processing system **100** may include additional servers, clients, routers, other devices, and peer-to-peer architectures that are not shown.

In the depicted example, distributed data processing system 100 may include the Internet with network **101** representing a worldwide collection of networks and gateways that use various protocols to communicate with one another, such as LDAP, TCP/IP, HTTP, etc. Of course, distributed data processing system **100** may also include a number of different types of networks, such as, for example, an intranet, a local area network (LAN), or a wide area network (WAN). For example, server **102** directly supports client **109** and network **110,** which incorporates wireless communication links. Network-enabled phone **111** connects to network **110** through wireless link **112,** and PDA **113** connects to network **110** through wireless link **114.** Phone **111** and PDA **113** can also directly transfer data between themselves across wireless link **115** using an appropriate technology, such as Bluetooth™ wireless technology, to create so-called personal area networks or personal ad-hoc networks. In a similar manner, PDA **113** can transfer data to PDA **107** via wireless communication link **116.**

The present invention could be implemented on a variety of hardware platforms and software environments. **Figure 1A** is intended as an example of a heterogeneous computing environment and not as an architectural limitation for the present invention.

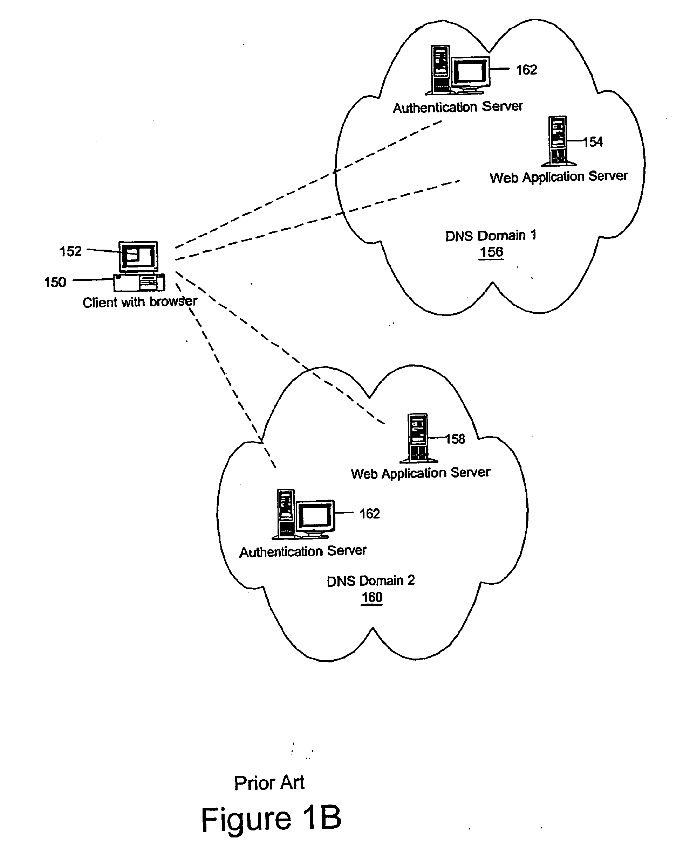

With reference now to **Figure 1B,** a network diagram illustrates a more specific, yet generic, Web-based environment in which the present invention may be implemented. In this environment, a user of a browser **152** at client **150** desires to access a protected resource on web application server **154** in DNS domain **156,** or on web application server **158** in DNS domain **160.** A protected resource is a resource (an application, an object, a document, a page, a file, executable code, or other computational resource, communication-type resource, etc.) that is only accessed or retrieved if the requesting client browser is both authenticated and authorized. Each DNS domain may have an associated authentication server **162.** Typically, once the user is authenticated by the authentication server, a cookie may be set and stored in a cookie cache in the browser. The requesting client may make an intra-domain request or an inter-domain request for the protected resource. An intra-domain request means that the target resource is located on the same server that performs the authentication. An inter-domain request means that the target resource is located within the same Internet domain but is on a different server than the authentication server which established the authentication. A cross-domain request means that the user wishes to access a protected resource that is outside the DNS domain that the user is currently using.

As note above, the present invention may be used within a variety of networks and hardware platforms. More particularly, though, the present invention provides a methodology so that a user is not challenged for authentication purposes when attempting to access protected resources within multiple, affiliated domains. This allows some degree of free movement between domains that participate in a cross-domain, single-sign-on federation or arrangement. For example, a large extranet may have multiple domains, each with its own set of users and protected resources. However, the protected resources may have a common enterprise-wide association, and there may be considerable overlap among the sets of users. A user can gain some efficiency or productivity in not having to pass multiple authentication challenges when entering the separate domains. Hence, the present invention attempts to remove barriers to free movement across Web sites.

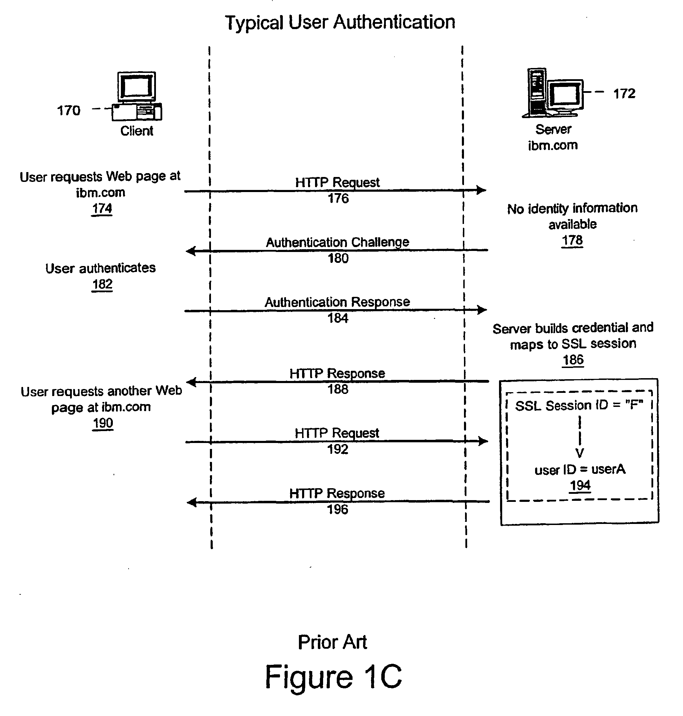

With reference now to **Figure 1C,** a data flow diagram illustrates a prior art process that may be used when a client attempts to access a protected resource. As illustrated, the user at a client workstation 170 seeks access over a computer network to a protected resource on a server 172 through the user's Web browser executing on the client workstation. As noted above, a protected resource is identified by a Uniform Resource Locator (URL), or more generally, a Uniform Resource Identifier (URI), that can only be accessed by an authenticated and authorized user. The computer network may be the Internet, an intranet, or other network, as shown in **Figure 1A** or **Figure 1B,** and server may be a Web Application Server (WAS), a server application, a servlet process, or the like.

The process is initiated when the user requests the protected resource, such as a Web page within the domain "ibm.com" (step **174).** The Web browser (or associated application or applet) generates an HTTP Request that is sent to the Web server that is hosting the domain "ibm.com" (step 176). The server determines that it does not have an active session for the client (step **178),** so the server requires the user to perform an authentication process by sending the client some type of authentication challenge (step **180).** The authentication challenge may be in various forms, such as a Hypertext Markup Language (HTML) form, into which the user must enter required information (step **182),** such as a user identifier and an associated password.

The authentication response information in the HTML form is posted to the server (step **184),** at which point the server authenticates the user by retrieving previously submitted registration information and matching the presented authentication information with the user's stored information. Assuming the authentication is successful, a Secure Sockets Layer (SSL) session with a unique session identifier (session ID) is assigned to the authenticated user so that subsequent requests from the user do not trigger another authentication challenge (step **186).** In other words, the user will be recognized as having been previously authenticated.

Although **Figure 1C** depicts a typical prior art process, it should be noted that other alternative session state management techniques may be depicted at this point, such as using cookies to identify users with active sessions, which may include using the same cookie that is used to provide authentication proof.

The server then retrieves the requested Web page and sends an HTTP Response to the client (step **188).** At that point, the user may request another page within "ibm.com" (step **190)** within the browser by clicking a hypertext link, and the browser sends another HTTP Request to the server (step **192).** At that point, the server recognizes that the user has an active session (step **194),** and the server sends the requested Web page back to the client in another HTTP Response (step **196).**

In contrast, with the present invention, a first domain, which has already authenticated a user, generates an introductory authentication token when the user attempts to access a protected resource at a second domain. The introductory authentication token is then passed from the first domain to the second domain via HTTP-redirection. The second domain may accept the introductory token as proof of the identity of the user, and the second domain can then authorize the user to access particular resources within the second domain according to the user's identity within the second domain, which is derived from the user identity presented by the first domain. These and other features of the present invention are described in more detail further below.

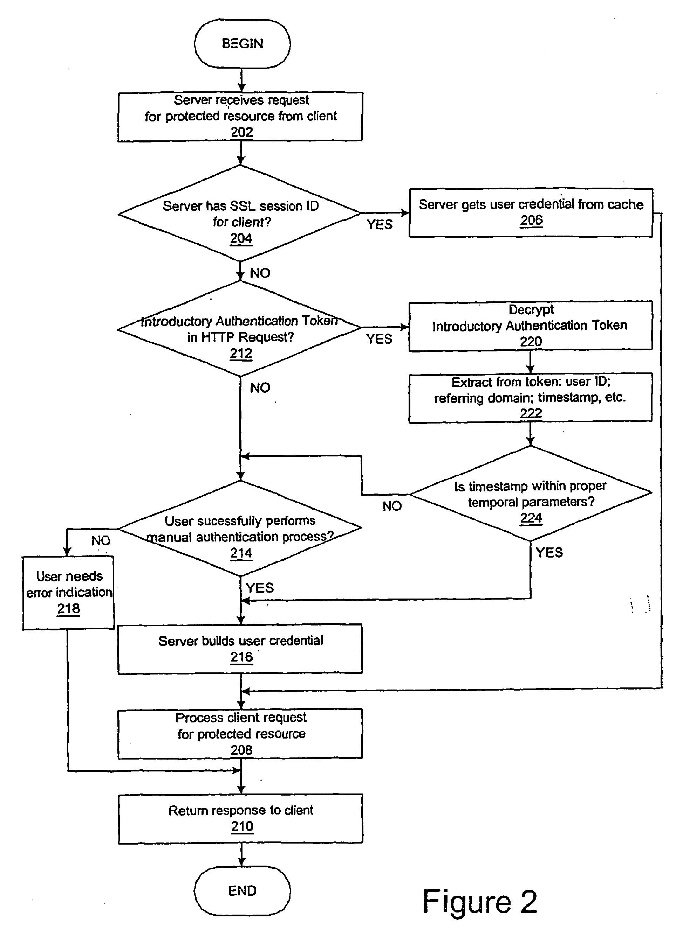

With reference now to Figure 2, a flowchart shows a cross-domain, single-sign-on (CD-SSO) process implemented in accordance with a preferred embodiment of the present invention.

It should be noted that **Figures 2-4B** may use a variety of session state management techniques to determine whether or not a client has an active session on the server that is receiving requests for a protected resource. In a preferred embodiment, a session state manager component may be used to track SSL session IDs in which each client is assigned a unique SSL session ID by each CD-SSO server when it authenticates to a CD-SSO server. Alternatively, other session management methodologies may also be used, such as setting a cookie at the client for the duration of a session.

However, it is well known that different session management methodologies have different advantages and vulnerabilities. If a cookie is not used and session management is accomplished solely through the use of session IDs, then terminating a client session can be accomplished entirely on the server side. If cookies are used in a given session management implementation, then extra steps must be performed to clean up the cookie trail, such as deleting any cookies set at the client for the session, if the server is going to ensure that the logout process is completely secure.
It should be understood that because the present invention avoids the use of cookies for any authentication purposes, the present invention may be combined with cookie-less session state management, thereby enabling cross-domain, single-sign-on functionality without the use of any cookies by any servers that are functioning within a group of CD-SSO domains.

The process begins when a server receives a request from a client for a protected resource (step 202). In this example, the server may be responsible for authentication processes and for supporting Web applications.

The server then determines whether or not it has an active SSL session for the client (step **204**). If so, then the server retrieves the client's credential from its cache (step 206). Each client request for a protected resource is prefaced by checking whether or not the client has the appropriate access privileges in its credentials; in this example, once the server retrieves the client's credentials, it is assumed that the client has the appropriate access privileges for requesting an action on a protected resource. The server then processes the client request (step 208), and a response is generated and returned to the client (step 210). The client may then submit additional requests.

If the server has not established an active SSL session for the client, as determined at step 204, then the server determines whether the client's HTTP Request contains an introductory authentication token, preferably appended to the URI (step 212). The introductory authentication token of the present invention allows a user to move among a group of domains that provide cross-domain, single-sign-on functionality in accordance with the present invention, as explained in more detail further below. If the HTTP message does not have an introductory authentication token, then the server forces the user at the client to complete a manual authentication process, such as that described with respect to Figure 1C. A determination is made as to whether or not the authentication process is successful (step 214).

If the authentication process is successful, then the server builds and caches the user's/clients's credentials (step **216)** during which the server establishes an SSL session and assigns the client an SSL session ID. At that point, the server can process the client's request for the protected resources at step **208** and then return the generated response to the client at step **210.** If the user does not successfully complete the authentication process, then the server can generate some type of error response to the user (step **218),** which is then returned to the client at step **210.**

If the HTTP Request from the client contains an introductory authentication token, which in the present invention is preferably appended to the URI in the HTTP Request, then the server decrypts the introductory authentication token (step **220)** and extracts various data items from the token (step **222),** such as the user ID of the user that is operating the client, the domain from which the user is transferring, and a timestamp.

The timestamp can be optionally included so that the token has a limited lifetime, thereby decreasing the risk of inadvertent authentication of an unknown third party. A determination is made as to whether or not the timestamp is valid (step **224).** The validity of the timestamp may be established by comparing the current time with the timestamp and determining whether the time difference between the two is less than the value of a system parameter that indicates a maximum threshold value for such timestamps. If the timestamp is not acceptable, then the server may require the user at the client to successfully complete a manual authentication process, as shown by the branching of the flowchart back to step **214.** If the timestamp is acceptable, then the server establishes an SSL session for the client, as shown by the branching of the flowchart to step **216.** Once the response is sent back to the client, the processing of the client request for a protected resource is complete.

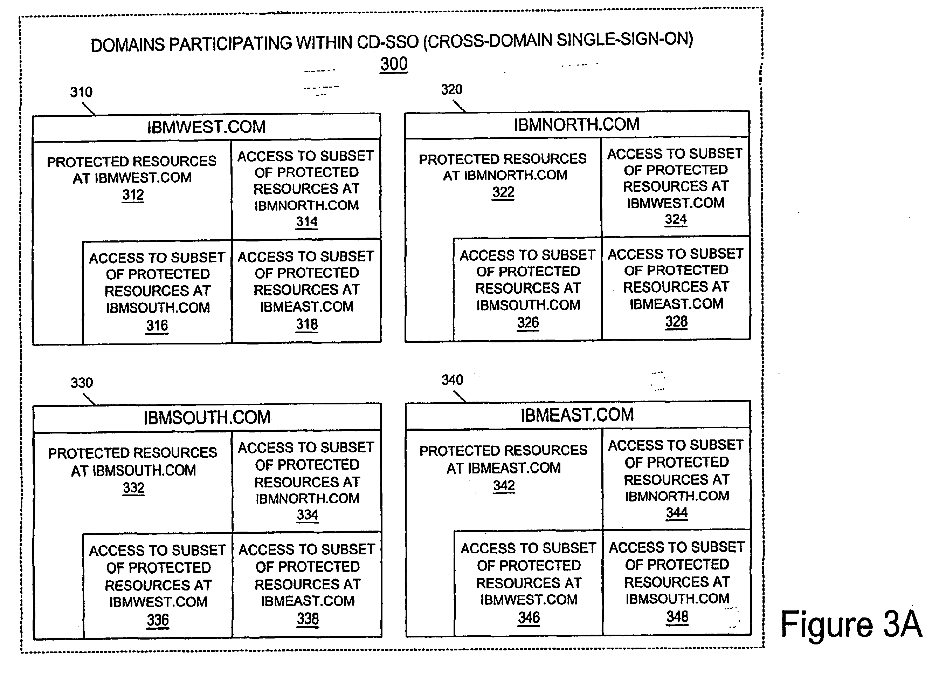

With reference now to **Figure 3A,** a block diagram depicts a logical organization of information within a set of cross-domain, single-sign-on domains. CD-SSO domain set **300** shows a set of domains that have incorporated CD-SSO functionality. Each domain with domain set **300** has protected and unprotected resources within its domain. When a resource is "within a domain", it is within the domain name space of a particular domain. A domain name is an address of a network connection that identifies the owning entity of that address in a hierarchical format in accordance with the Domain Name System (DNS), which associates domain name addresses and numerical IP address in a well known manner. For example, a resource, which in this case is a Web page, at address "http://www.domain.org/homepage.htm" is within the domain "domain.org".

Domains **310, 320, 330,** and **340** have protected or other types of resources within their domains, which are shown in the figure as protected resources **312, 322, 332,** and **342.** In a well known manner, authenticated and authorized users would be able to access these resources by sending requests for a given resource to a server that supports a given domain that stores or contains the given resource. Each resource may be represented by one or more graphical user interface (GUI) indicators within Web pages that are displayed within a browser application on a client computer, and when a user selects the GUI indicator, the browser attempts to obtain the resource by sending a request for the resource to a server as specified by the domain address associated with the GUI indicator.

In the present invention, domains **310, 320, 330,** and **340** also provide initial accessibility to certain other resources that are known at a given domain but actually served from other domains within the CD-SSO set of domains. Each domain "has knowledge" of a subset of the protected or other types of resources provided by one or more other domains, and each domain provides some manner for initially requesting access to the subset of resources at the other domain or domains. For example, domain **310** provides initial access to the other CD-SSO domain resources through access request mechanisms **314, 316,** and **318;** domain **320** provides initial access to the other CD-SSO domain resources through access request mechanisms **324, 326,** and **328;** domain **330** provides initial access to the other CD-SSO domain resources through access request mechanisms **334, 336,** and **338;** and domain **340** provides initial access to the other CD-SSO domain resources through access request mechanisms **344, 346,** and **348.**

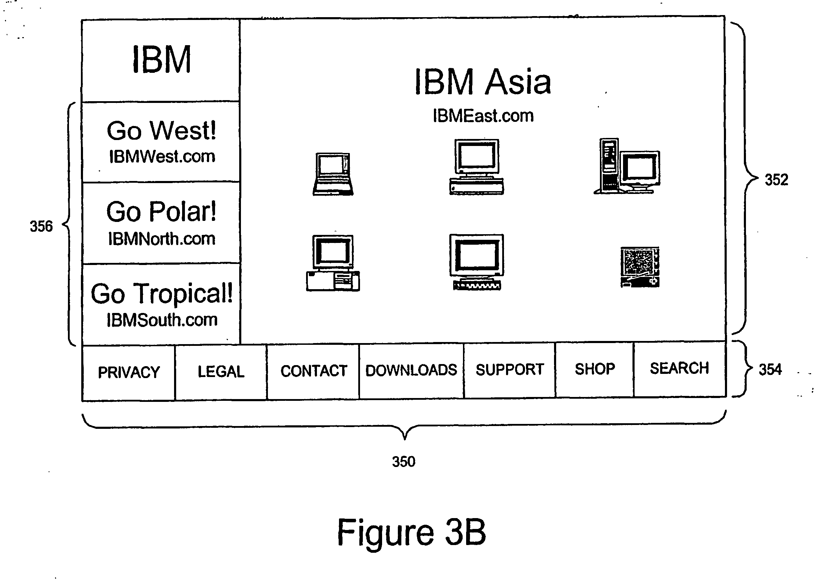

With reference now to **Figure 3B,** an exemplary Web page from a cross-domain, single-sign-on domain shows a main portion with indicators for protected or other resources within the CD-SSO domain and a border portion showing indicators for protected or other resources from which access can be initiated at the CD-SSO domain but which are stored and controlled by servers at other CD-SSO domains. **Figure 3B** shows GUI indicators that allow a user to easily request resources from a variety of domains in which access to the information within the domains are logically organized as shown within **Figure 3A.**

It should be noted that the present invention is concerned with providing cross-domain access to protected resources. Although each domain may have knowledge of a subset of the unprotected resources provided by one or more other domains, the examples emphasize requests for protected resources as these types of requests invoke the CD-SSO functionality of the present invention.

Web page 350 shows various GUI icons and hypertext links that could be displayed within a browser application window; the icons and hyperlinks may be selected by a user of the browser application in a well known manner. Main portion **352** of Web page 350 indicates the domain name of the Web site that the user is viewing and accessing. Hyperlinks **354** indicate other portions of the Web site that a user may desire to visit.

Hyperlinks **356** indicate the domain names of other Web sites that a user may desire to visit. Hyperlinks **356** are associated with CD-SSO domains that form a set of CD-SSO domains that includes the domain that provided Web page **350.**

In this example, Web page **350** was served from domain "IBMEast.com". The user does not see the actual addresses that are associated with hyperlinks **356** as would be contained within the markup language file that is represented by Web page **350.** However, each of the hyperlinks is associated with an address at "IBMEast.com" that initiates access to the other domains. For example, hyperlink "IBMWest.com" in Web page **350** may have an associated domain name address such as "http://www.ibmeast.com/CD-SSO/ibmwest/west/login.html" within the markup language file. When the user clicks on the "IBMWest.com" hyperlink, the request is sent to domain "IBMEast.com" for processing. The server supporting "IBMEast.com" would recognize the requested URL as a protected resource at another domain and would then invoke the appropriate CD-SSO functionality in accordance with the present invention.

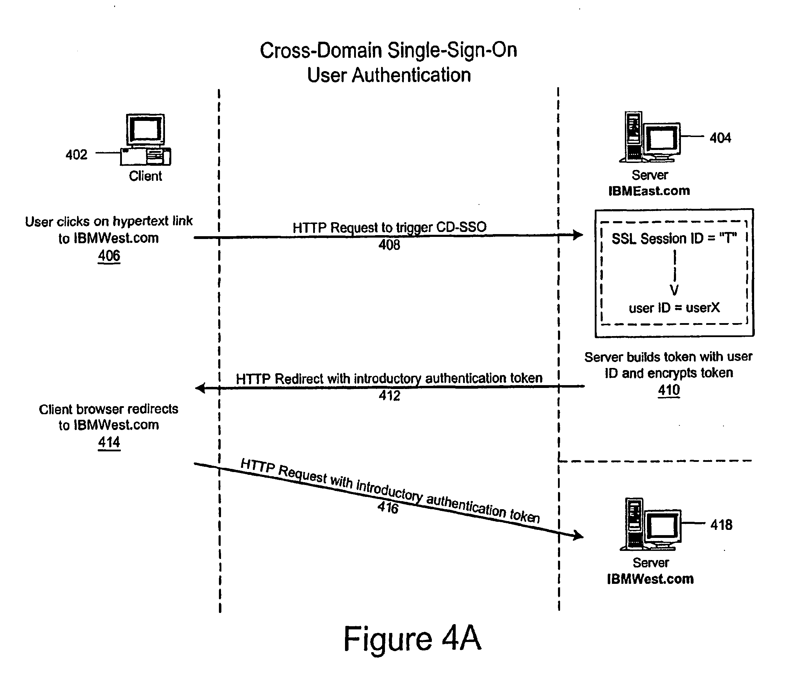

It can be assumed that the user who has requested access to Web page 350 has been previously authenticated and authorized to receive Web page 350, which would be one example of a protected resource. The user then has the option of moving to another CD-SSO domain by clicking on one of the hyperlinks **356,** at which time the CD-SSO functionality of the present invention would be invoked as described in **Figure 2** and **Figures 4A-4B,** and the user might then be authorized to receive the requested resource represented by the selected hyperlink without being required to sign-on at the new domain.

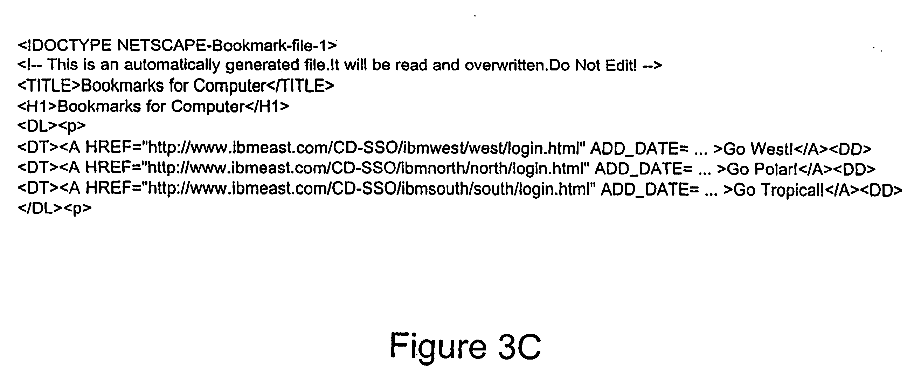

With reference now to **Figure 3C,** an exemplary bookmark file shows some URIs of protected resources at CD-SSO domains that have been bookmarked and stored within the bookmark file. In this case, the bookmark file is a simple HTML-formatted file.

**Figure 3C** is provided in order to emphasize the manner in which the CD-SSO domains are associated through shared knowledge of resources within the CD-SSO domains. When a server at a given CD-SSO domain serves a Web page or other resource that contains indications of resources (e.g., hyperlinks) at other CD-SSO domains, the provided indicators will generate requests from the client back to the server supporting the given CD-SSO domain.

Following the example shown in **Figure 3B,** the bookmark file shown in **Figure 3C** could have been created when a user was browsing through domain "IBMEast.com". As the user viewed the hyperlinks to associated Web sites, the user decided to bookmark each of the CD-SSO domains as provided by the hypertext links from the "IBMEast.com" Web page. Therefore, each of the domain name addresses refers to a file within the "IBMEast.com" domain. If the user attempts to access one of the other domains through the bookmark, the request would first be sent to "IBMEast.com", at which point the CD-SSO functionality would be invoked.

Hence, even if a user has been logged off of all CD-SSO domains and is viewing a Web page from an unrelated domain and then selects a bookmark from the bookmark file shown in **Figure** 3C to move to "IBMWest.com", the request would be sent to "IBMEast.com".

With reference now to **Figures 4A-4B,** data flow diagrams illustrate some of the processing involved when a user moves between CD-SSO (cross-domain, single-sign-on) domains in accordance with a preferred embodiment of the present invention. **Figures 4A-4B** show some of the actions and the data transferred between a client and the servers during the user movement between domains, whereas **Figure 2** shows a flowchart depicting a process that would be performed by each server that is responsible for authentication within a domain in a group of CD-SSO domains.

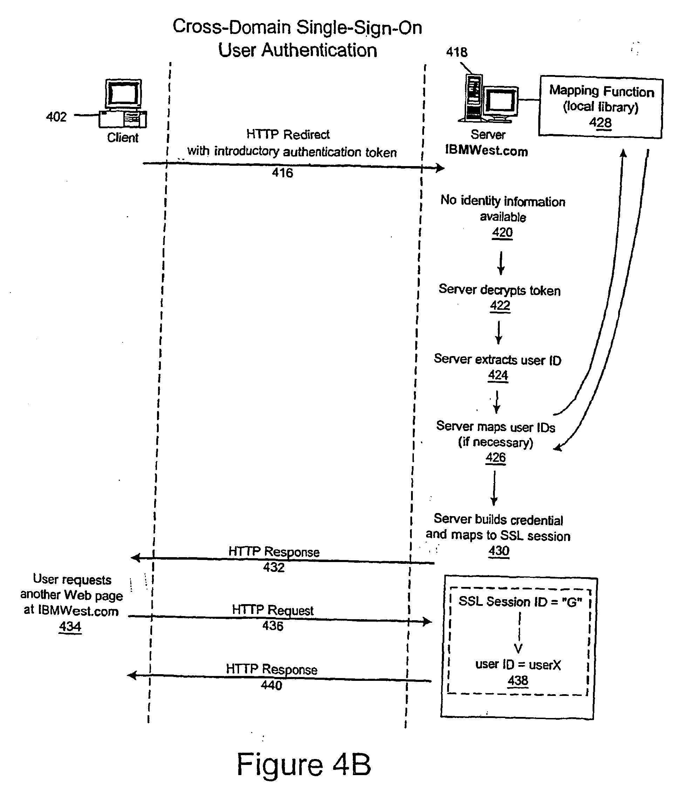

Referring now to **Figure 4A,** a user at client **402** has already established an SSL session with respect to server **404.** The manner in which the SSL session was established would be similar to that shown in **Figure 2.** However, with respect to **Figure 4A,** the activation of the SSL session is deferred because it will be shown with respect to **Figure 4B.** In this example, a user has been browsing protected resources on domain "IBMEast.com". It should be noted that case within the text strings of a domain name is generally ignored.

At some point in time, the user clicks on a hypertext link displayed within the browser at client **402** in order to move from a first CD-SSO domain "IBMEast.com" to a second CD-SSO domain "IBMWest.com" (step **406).** As is well known in the art, the user may select a domain, Web page location, or the like, in a variety of manners, such as by activating a browser-cached bookmark, etc.

Each domain in the CD-SSO group of domains maintains its own authorization policy or enterprise authentication mechanism. For a user to gain access to protected resources at a given domain, the user must have previously registered at the domain to establish a user identity, user account, etc. Alternatively, a user identity has been generated by a system administrator for the user at the domain. Hence, it should be understood that for the introductory authentication token to have utility, the user must have previously established a user identity at each domain within the CD-SSO group to which the user desires to gain access.

In addition, transferring authentication information across CD-SSO domains requires the intervention of the server to which the user is currently authenticated, e.g., by accessing a redirectable hyperlink within "IBMEast.com" in order to reach "IBMWest.com". This implies that each server supporting a domain that is participating in the CD-SSO group of domains have knowledge of all of the other domains within the CD-SSO group and must maintain links to these domains from their own Web resources.

In response to the user action that initiates the transfer between CD-SSO domains, client **402** sends an HTTP Request that triggers the transfer from the first CD-SSO domain to the second CD-SSO domain (step **408).** Server **404** recognizes the requested URI in the HTTP Request as a request to access a protected resources under the control of a server supporting the second CD-SSO domain. Server **404** then generates an introductory authentication token (step **410),** preferably appends the token to the redirection URI, places the redirection URI in the HTTP Redirect message, and then sends the HTTP Redirect to the client (step **412).**

HTTP Redirects are well known in the art. An HTTP Redirect allows a server to respond to a client request with instructions to load a resource at a different location, and in response, most browsers will automatically request the new resource in response to a redirect. When the browser receives the HTTP Redirect, the browser issues a new HTTP Request using the redirected URI provided in the HTTP Redirect.

The format of the introductory authentication token may vary depending upon system implementation. In general, the token must at least include some indication of the user identity at the first CD-SSO domain. The token may additionally include an optional domain identifier for the first domain if this information is now reflected in the user identity that is stored within the token. The token may also include an optional timestamp for limiting the lifetime of the token, as described above with respect to **Figure 2.** The token may be formatted as a binary string, as an encoded ASCII string, or in some other interpretable format. The token may be optionally formatted in accordance with various standards, such as PKCS (Public Key Cryptography Standards) specifications for enveloped data.

The information within the introductory authentication token is encrypted to hide the information so as to limit the risk that it might be misappropriated. The servers within the CD-SSO group may share or synchronize cryptographic keys in accordance with many well known manners in the prior art. For example, each of the servers in the group may have obtained or received a copy of the public key of each of the other servers. Since the first domain from which the user is transferring knows the target domain to which the user is transferring, the first domain can use the public key of the second domain to encrypt the information that is placed within the introductory authentication token. The second domain can subsequently use its private key to decrypt the token. It should be noted either that the token itself is the encrypted data item or that the data items within the token are encrypted and then placed within the token.

Client **402** receives the HTTP Redirect with the introductory authentication token, and in response, the browser at the client generates a new HTTP Request for the second domain as specified in the redirection URI (step **414).** Since the introductory authentication token is preferably appended to part of the redirection URI, the browser transfers the entire URI, including the introductory authentication token, to the specified destination.

As an example of the format of the redirection URI, the HTTP Redirect may contain the following: "http://www.ibmwest.com/987324C0...F16916AE9684", wherein "987324C0...F16916AE9684" is a portion of an ASCII-encoded, hexadecimal string for an encrypted, introductory authentication token. By appending the token to the URI, the browser is not aware that it is processing the token when it copies the token from the HTTP Redirect to the new HTTP Request. In general, the introductory authentication token may have the form:
{user ID; introducing/transferring domain; timestamp}. In Figure 4A, the user ID might be extended as "userX@ibmeast.com" in which the user ID and the first domain identifier have been combined in a well known manner. Other metadata may be associated with the token to provide an indication of the nature of the token. For example, the redirected URI may be represented as:
   "http://www.ibmwest.com/IAT:987324C0...F16916AE9684", where the string "IAT" stands for "Introductory Authentication Token", thereby allowing a receiving server to quickly identify that an HTTP Request has as associated token.

Client **402** sends the new HTTP Request (step **416)** to server **418** at the second or transferred domain. At that point, the user may have been either permanently or only temporarily left the first domain. Depending upon the system implementation, the user may permitted to access protected resources at the first domain subsequent to accessing protected resources at the second domain. However, the user's SSL session at server **404** may expire within a few minutes. It should be noted that the manner in which a domain in the CD-SSO group of domains logs out a user from a session in one or more of the domains may vary depending upon system implementation without impacting the operation of the present invention.

Referring now to **Figure 4B,** a process is shown in which client **402** establishes an SSL session with server **418.** Client **402** has sent the new HTTP Request (step **416)** to server **418** that is acting, at a minimum, as an authentication server for the second or transferred domain, which was specified in the redirected URI.

In this example, server **418** determines that it has not yet established an SSL session for client **402** (step **420).**
However, server **418** does discover an introductory authentication token in the HTTP Request, most likely by parsing the URI, at which point it decrypts the token (step **422).** The user identity and introducing domain are then retrieved from the decrypted information in the token (step **424) .**

As stated previously, each domain is responsible for authorizing a user in accordance with the domain's own policies, and a user has a user identity within each domain in the group of CD-SSO domains; the user IDs may differ in the different domains. Hence, server **418** (or an associated server) optionally maps the transmitted user identity to an identity as known within the second domain (step **426).**
Mapping function **428** may incorporate a variety of well known mapping techniques. In addition, server **418** may choose to evaluate the current state of its business relationship with the introducing server **404.** Even though servers **418** and **404** are known to be participating in a cross-domain single-sign-on relationship, server **418** may choose not to honor the introductory authentication token based on identity of the introducing domain, or server **418** may chose to require an additional form of authentication from the user. This provides an additional level of protection to server **418** while participating in a CD-SSO relationship.

Server **418** then builds and caches a credential for the user and establishes an SSL session for client **402** (step **430),** after which server **418** generates and sends an HTTP Response back to client **402** containing the originally requested protected resource (step **432).**

At that point, the user may request another page within domain "IBMWest.com" within the browser by clicking another hypertext link (step **434),** and the browser sends another HTTP Request to the server (step **436).** In response, the server recognizes that the user has an active session (step **438),** and the server sends the requested Web page (or other type of protected resource or information) back to the client in another HTTP Response (step **440).**

The advantages of the present invention should be apparent in view of the detailed description of the invention that is provided above. In the present invention, a first domain, which has already authenticated a user, generates an introductory authentication token when the user attempts to access a protected resource at a second domain. The introductory authentication token is then passed from the first domain to the second domain via HTTP-redirection. The second domain may accept the introductory token as proof of the identity of the user, and the second domain authorizes the user to access particular resources within the second domain according to a user identity within the second domain.
With the present invention, the user is not challenged for authentication purposes when attempting to access a protected resource within the second domain. This allows some degree of free movement between domains that participate in a cross-domain, single-sign-on federation or arrangement. The user gains some efficiency or productivity in not having to pass multiple authentication challenges, which can be barriers to free movement across Web sites.

In addition, the user is spared potential confusion when moving between domains. Some enterprises maintain multiple domains merely for geographic reasons, in which one domain is maintained closer to one set of employees or consumers, or for scalability reasons, in which case the load on a single server or a set of servers for a single domain is lightened by distributing the load across multiple domains. These architectural artifacts should be transparent to a user when possible, and with the present invention, the user is not required to perform actions to pass multiple authentication barriers when a single, successful sign-on can be used to gain access to multiple domains.

The present invention also incorporates an open standards approach that is based entirely on a legitimate use of those open standards. The introductory authentication token is passed in an HTTP Redirect without using a proprietary message format between the domains that allow cross-domain single-sign-on.

It is important to note that while the present invention has been described in the context of a fully functioning data processing system, those of ordinary skill in the art will appreciate that the processes of the present invention are capable of being distributed in the form of instructions in a computer readable medium and a variety of other forms, regardless of the particular type of signal bearing media actually used to carry out the distribution. Examples of computer readable media include media such as EPROM, ROM, tape, paper, floppy disc, hard disk drive, RAM, and CD-ROMs and transmission-type media, such as digital and analog communications links.

The description of the present invention has been presented for purposes of illustration but is not intended to be exhaustive or limited to the disclosed embodiments. Many modifications and variations will be apparent to those of ordinary skill in the art. The embodiments were chosen to explain the principles of the invention and its practical applications and to enable others of ordinary skill in the art to understand the invention in order to implement various embodiments with various modifications as might be suited to other contemplated uses.

## Claims

1. A method for authenticating a user within a distributed data processing system, the method comprising the steps of:
receiving (408) a request for a protected resource (312) at a first server (404) supporting a first domain (340) from a client (402) on behalf of a user, wherein the first domain (340) is a member of a group of domains (300), wherein the user has been previously authenticated to the first server (404), and wherein the user has been previously registered with a user identity in the first domain (340);
determining whether or not the requested protected resource (312) is within a second domain (310), wherein the second domain (310) is a member of the group of domains (300);
in response to a determination that the requested protected resource (312) is within a second domain (310), generating (410) an introductory authentication token at the first server (404), wherein the introductory authentication token comprises user identity information for the user;
**characterized by** the method further comprising the steps of :
encrypting (410) the introductory authentication token ; inserting (412) the encrypted introductory authentication token within a redirect response;
inserting (412) a redirection URI for the second domain in the redirect response; and
sending (412) the redirect response to the client (402).

2. The method of claim 1 further comprising:
inserting (410) a timestamp in the introductory authentication token.

3. The method of claim 1 further comprising:
inserting (410) an identifier for the first domain (340) in the introductory authentication token.

4. The method of claim 1, wherein the encrypted introductory authentication token is formatted as an encoded ASCII string.

5. The method of claim 1 further comprising:
receiving (412) the redirect response; and
generating (414) a second request for the protected resource (312);
sending (416) the second request to the second domain (310) as identified by the redirect response.

6. The method of claim 1 further comprising:
receiving (416,202) a request for the protected resource (312) at a second server (418) supporting the second domain (310), wherein the request for the protected resource (312) at the second server (418) comprises the encrypted introductory authentication token;
decrypting (422,220) the encrypted introductory authentication token from the request for the protected resource (312) at the second server (418) to generate a decrypted introductory authentication token; and
retrieving (424,222) the user identity information for the user from the decrypted introductory authentication token.

7. The method of claim 6 further comprising:
authenticating (430,216) the user at the second domain (310) based on the retrieved user identity information.

8. The method of claim 6 further comprising:
providing (208) access to the protected resource (312) within the second domain (310) based on the retrieved user identity information.

9. The method of claim 6 further comprising:
mapping (426) the retrieved user identity information to a user identity in the second domain (310), wherein the user has been previously registered with a user identity in the second domain (310).

10. The method of claim 9 further comprising:
authenticating (430,216) the user at the second domain (310) based on the user identity in the second domain (310).

11. The method of claim 9 further comprising:
providing (208) access to the protected resource (312) within the second domain (310) based on the user identity in the second domain (310).

12. An apparatus for authenticating a user within a distributed data processing system, the apparatus comprising:
first receiving means for receiving (408) a request for a protected resource (312) at a first server (404) supporting a first domain (340) from a client (402) on behalf of a user, wherein the first domain (340) is a member of a group of domains (300), wherein the user has been previously authenticated to the first server (404), and wherein the user has been previously registered with a user identity in the first domain (340);
determining means for determining whether or not the requested protected resource is within a second domain (310), wherein the second domain (310) is a member of the group of domains (300);
first generating means for generating (410), in response to a determination that the requested protected resource (312) is within a second domain (310), an introductory authentication token at the first server (404), wherein the introductory authentication token comprises user identity information for the user;
**characterised by** the apparatus further comprising:
first encrypting means for encrypting (410) the introductory authentication token;
first inserting means for inserting (412) the encrypted introductory authentication token within a redirect response;
second inserting means for inserting (412) a redirection URI for the second domain in the redirect response; and
first sending means for sending (412) the redirect response to the client (402).

13. The apparatus of claim 12 further comprising:
third inserting means for inserting (410) a timestamp in the introductory authentication token.

14. The apparatus of claim 12 further comprising:
fourth inserting means for inserting (410) an identifier for the first domain (340) in the introductory authentication token.

15. The apparatus of claim 12 further comprising:
second receiving means for receiving (412) the redirect response; and
second generating means for generating (414) a second request for the protected resource (312);
second sending means for sending (416) the second request to the second domain (310) as identified by the redirect response.

16. The apparatus of claim 12 further comprising:
third receiving means for receiving (416,202) a request for the protected resource (312) at a second server (418) supporting the second domain (310), wherein the request for the protected resource (312) at the second server (418) comprises the introductory authentication token; decrypting means for decrypting (422,220) the encrypted introductory authentication token from the request for the protected resource (312) at the second server (418) to generate a decrypted introductory authentication token; and
retrieving means for retrieving (424,222) the user identity information for the user from the introductory authentication token.

17. The apparatus of claim 16 further comprising:
first authenticating means for authenticating (430,216) the user at the second domain (310) based on the retrieved user identity information.

18. The apparatus of claim 16 further comprising:
first providing means for providing (208) access to the protected resource (312) within the second domain (310) based on the retrieved user identity information.

19. The apparatus of claim 16 further comprising:
mapping means for mapping (426) the retrieved user identity information to a user identity in the second domain (310), wherein the user has been previously registered with a user identity in the second domain (310).

20. The apparatus of claim 19 further comprising:
second authenticating means for authenticating (430,216) the user at the second domain (310) based on the user identity in the second domain (310).

21. The apparatus of claim 19 further comprising:
second providing means for providing (208) access to the protected resource (312) within the second domain (310) based on the user identity in the second domain (310).

22. A computer program comprising software code portions for performing a method according to anyone of the claims 1 to 11 when said program is run on a computer system.

23. The computer program of claim 22 stored on a computer usable medium.

## Patentansprüche

1. Verfahren zum Authentifizieren eines Benutzers innerhalb eines verteilten Datenverarbeitungssystems, wobei das Verfahren die folgenden Schritte umfasst:
Empfangen (408) einer Anforderung nach einer geschützten Ressource (312) in einem ersten Server (404), der eine erste Domäne (340) unterstützt, von einem Client (402) im Namen eines Benutzers, wobei die erste Domäne (340) ein Mitglied einer Gruppe von Domänen (300) ist, in welcher sich der Benutzer bereits zuvor bei dem ersten Server (404) authentifiziert hat, und in welcher der Benutzer bereits zuvor mit einer Benutzeridentität in der ersten Domäne registriert wurde (340),
Feststellen, ob sich die angeforderte geschützte Ressource (312) innerhalb einer zweiten Domäne (310) befindet oder nicht, wobei die zweite Domäne (310) ein Mitglied der Gruppe von Domänen (300) ist,
als Reaktion auf eine Feststellung, dass sich die angeforderte geschützte Ressource (312) innerhalb einer zweiten Domäne (310) befindet, das Erzeugen (410) eines Authentifizierungs-Bekanntmachungstokens im ersten Server (404), wobei das Authentifizierungs-Bekanntmachungstoken Benutzeridentitätsinformationen für den Benutzer umfasst,
**dadurch gekennzeichnet, dass** das Verfahren des Weiteren die folgenden Schritt umfasst:
Verschlüsseln (410) des Authentifizierungs-Bekanntmachungstokens,
Einfügen (412) des verschlüsselten Authentifizierungs-Bekanntmachungstokens in eine Umleitungsantwort,
Einfügen (412) eines Umleitungs-URI für die zweite Domäne in die Umleitungsantwort und
Senden (412) der Umleitungsantwort an den Client (402).

2. Verfahren nach Anspruch 1, das des Weiteren Folgendes umfasst:
Einfügen (410) eines Zeitstempels in das Authentifizierungs-Bekanntmachungstoken.

3. Verfahren nach Anspruch 1, das des Weiteren Folgendes umfasst:
Einfügen (410) einer Kennung für die erste Domäne (340) in das Authentifizierungs-Bekanntmachungstoken.

4. Verfahren nach Anspruch 1, bei dem das verschlüsselte Authentifizierungs-Bekanntmachungstoken als codierte ASCII-Zeichenkette formatiert ist.

5. Verfahren nach Anspruch 1, das des Weiteren Folgendes umfasst:
Empfangen (412) der Umleitungsantwort und
Erzeugen (414) einer zweiten Anforderung nach der geschützten Ressource (312),
Senden (416) der zweiten Anforderung an die zweite Domäne (310) gemäß der Kennung durch die Umleitungsantwort.

6. Verfahren nach Anspruch 1, das des Weiteren Folgendes umfasst:
Empfangen (416, 202) einer Anforderung nach der geschützten Ressource (312) in einem zweiten Server (418), der die zweite Domäne (310) unterstützt, wobei die Anforderung nach der geschützten Ressource (312) im zweiten Server (418) das verschlüsselte Authentifizierungs-Bekanntmachungstoken umfasst,
Entschlüsseln (422, 220) des verschlüsselten Authentifizierungs-Bekanntmachungstokens aus der Anforderung nach der geschützten Ressource (312) im zweiten Server (418), um ein entschlüsseltes Authentifizierungs-Bekanntmachungstoken zu erzeugen, und
Abrufen (424, 222) der Benutzeridentitätsinformationen für den Benutzer aus dem entschlüsselten Authentifizierungs-Bekanntmachungstoken.

7. Verfahren nach Anspruch 6, das des Weiteren Folgendes umfasst:
Authentifizieren (430, 216) des Benutzers in der zweiten Domäne (310) auf der Grundlage der abgerufenen Benutzeridentitätsinformationen.

8. Verfahren nach Anspruch 6, das des Weiteren Folgendes umfasst:
Bereitstellen (208) des Zugriffs auf die geschützte Ressource (312) innerhalb der zweiten Domäne (310) auf der Grundlage der abgerufenen Benutzeridentitätsinformationen.

9. Verfahren nach Anspruch 6, das des Weiteren Folgendes umfasst:
Abbilden (426) der abgerufenen Benutzeridentitätsinformationen in einer Benutzeridentität in der zweiten Domäne (310), wobei der Benutzer zuvor mit einer Benutzeridentität in der zweiten Domäne (310) registriert wurde.

10. Verfahren nach Anspruch 9, das des Weiteren Folgendes umfasst:
Authentifizieren (430, 216) des Benutzers in der zweiten Domäne (310) auf der Grundlage der Benutzeridentität in der zweiten Domäne (310).

11. Verfahren nach Anspruch 9, das des Weiteren Folgendes umfasst:
Bereitstellen (208) des Zugriffs auf die geschützte Ressource (312) innerhalb der zweiten Domäne (310) auf der Grundlage der Benutzeridentität in der zweiten Domäne (310).

12. Einrichtung zum Authentifizieren eines Benutzers innerhalb eines verteilten Datenverarbeitungssystems, wobei die Einrichtung Folgendes umfasst:
erste Empfangsmittel zum Empfangen (408) einer Anforderung nach einer geschützten Ressource (312) in einem ersten Server (404), der eine erste Domäne (340) unterstützt, von einem Client (402) im Namen eines Benutzers, wobei die erste Domäne (340) ein Mitglied einer Gruppe von Domänen (300) ist, in welcher sich der Benutzer bereits zuvor bei dem ersten Server (404) authentifiziert hat, und in welcher der Benutzer bereits zuvor mit einer Benutzeridentität in der ersten Domäne registriert wurde (340),
Feststellungsmittel zum Feststellen, ob sich die angeforderte geschützte Ressource innerhalb einer zweiten Domäne (310) befindet oder nicht, wobei die zweite Domäne (310) ein Mitglied der Gruppe von Domänen (300) ist,
erste Erzeugungsmittel zum Erzeugen (410), als Reaktion auf eine Feststellung, dass sich die angeforderte geschützte Ressource (312) innerhalb einer zweiten Domäne (310) befindet, eines Authentifizierungs-Bekanntmachungstokens im ersten Server (404), wobei das Authentifizierungs-Bekanntmachungstoken Benutzeridentitätsinformationen für den Benutzer umfasst,
**dadurch gekennzeichnet, dass** die Einrichtung des Weiteren Folgendes umfasst:
erste Verschlüsselungsmittel (410) zum Verschlüsseln des Authentifizierungs-Bekanntmachungstokens,
erste Einfügemittel zum Einfügen (412) des verschlüsselten Authentifizierungs-Bekanntmachungstokens in eine Umleitungsantwort,
zweite Einfügemittel zum Einfügen (412) eines Umleitungs-URI für die zweite Domäne in die Umleitungsantwort und
erste Sendemittel zum Senden (412) der Umleitungsantwort an den Client (402).

13. Einrichtung nach Anspruch 12, die des Weiteren Folgendes umfasst:
dritte Einfügemittel zum Einfügen (410) eines Zeitstempels in das Authentifizierungs-Bekanntmachungstoken.

14. Einrichtung nach Anspruch 12, die des Weiteren Folgendes umfasst:
vierte Einfügemittel zum Einfügen (410) einer Kennung für die erste Domäne (340) in das Authentifizierungs-Bekanntmachungstoken.

15. Einrichtung nach Anspruch 12, die des Weiteren Folgendes umfasst:
zweite Empfangsmittel zum Empfangen (412) der Umleitungsantwort und
zweite Erzeugungsmittel zum Erzeugen (414) einer zweiten Anforderung nach der geschützten Ressource (312),
zweite Sendemittel zum Senden (416) der zweiten Anforderung an die zweite Domäne (310) gemäß der Kennung durch die Umleitungsantwort.

16. Einrichtung nach Anspruch 12, die des Weiteren Folgendes umfasst:
dritte Empfangsmittel zum Empfangen (416, 202) einer Anforderung nach der geschützten Ressource (312) in einem zweiten Server (418), der die zweite Domäne (310) unterstützt, wobei die Anforderung nach der geschützten Ressource (312) im zweiten Server (418) das Authentifizierungs-Bekanntmachungstoken umfasst, Entschlüsselungsmittel zum Entschlüsseln (422, 220) des verschlüsselten Authentifizierungs-Bekanntmachungstokens aus der Anforderung nach der geschützten Ressource (312) im zweiten Server (418), um ein entschlüsseltes Authentifizierungs-Bekanntmachungstoken zu erzeugen, und Abrufmittel zum Abrufen (424, 222) der Benutzeridentitätsinformationen für den Benutzer aus dem Authentifizierungs-Bekanntmachungstoken.

17. Einrichtung nach Anspruch 16, die des Weiteren Folgendes umfasst:
erste Authentifizierungsmittel zum Authentifizieren (430, 216) des Benutzers in der zweiten Domäne (310) auf der Grundlage der abgerufenen Benutzeridentitätsinformationen.

18. Einrichtung nach Anspruch 16, die des Weiteren Folgendes umfasst:
erste Bereitstellungsmittel zum Bereitstellen (208) des Zugriffs auf die geschützte Ressource (312) innerhalb der zweiten Domäne (310) auf der Grundlage der abgerufenen Benutzeridentitätsinformationen.

19. Einrichtung nach Anspruch 16, die des Weiteren Folgendes umfasst:
Abbildungsmittel zum Abbilden (426) der abgerufenen Benutzeridentitätsinformationen in einer Benutzeridentität in der zweiten Domäne (310), wobei der Benutzer zuvor mit einer Benutzeridentität in der zweiten Domäne (310) registriert wurde.

20. Einrichtung nach Anspruch 19, die des Weiteren Folgendes umfasst:
zweite Authentifizierungsmittel zum Authentifizieren (430, 216) des Benutzers in der zweiten Domäne (310) auf der Grundlage der Benutzeridentität in der zweiten Domäne (310).

21. Einrichtung nach Anspruch 19, die des Weiteren Folgendes umfasst:
zweite Bereitstellungsmittel zum Bereitstellen (208) des Zugriffs auf die geschützte Ressource (312) innerhalb der zweiten Domäne (310) auf der Grundlage der Benutzeridentität in der zweiten Domäne (310).

22. Computerprogramm, das Softwarecode-Teilbereiche zum Durchführen eines Verfahrens nach einem der Ansprüche 1 bis 11 umfasst, wenn das Programm auf einem Computersystem ausgeführt wird.

23. Computerprogramm nach Anspruch 22, das auf einem vom Computer verwendbaren Medium gespeichert ist.

## Revendications

1. Un procédé d'authentification d'un utilisateur dans un système de traitement de données distribué, le procédé comprenant les étapes consistant à :
recevoir (408) une requête pour une ressource (312) protégée, à un premier serveur (404) supportant un premier domaine (340) depuis un client (402) de la part d'un utilisateur, dans lequel le premier domaine (340) est un membre d'un groupe de domaines (300) dans lequel l'utilisateur a été antérieurement authentifié au premier serveur (404) et dans lequel l'utilisateur a été antérieurement enregistré avec une identité utilisateur dans le premier domaine (340) ;
déterminer si ou non la ressource protégée (312) demandée est située dans un deuxième domaine (310), dans lequel le deuxième domaine (310) est un membre du groupe de domaines (300) ;
en réponse à une détermination du fait que la ressource protégée (312) demandée est située dans un deuxième domaine (310), générer (410) un jeton d'authentification préliminaire au premier serveur (404), dans lequel le jeton d'authentification préliminaire comprend une information d'identité utilisateur pour l'utilisateur ;
**caractérisé par le fait que** le procédé comprend en outre les étapes consistant à :
chiffrer (410) le jeton d'authentification préliminaire ;
insérer (412) le jeton d'authentification préliminaire chiffré dans une réponse redirigée ;
insérer (412) un Identificateur Uniformisé de Resource URI de redirection pour le deuxième domaine dans la réponse redirigée ; et
envoyer (412) la réponse de redirection au client (402).

2. Le procédé selon la revendication 1, comprenant en outre :
l'insertion (410) d'une estampille temporelle dans le jeton d'authentification préliminaire.

3. Le procédé selon la revendication 1, comprenant en outre :
l'insertion (410) d'un identificateur pour le premier domaine (340) dans le jeton d'authentification préliminaire.

4. Le procédé selon la revendication 1, dans lequel le jeton d'authentification préliminaire chiffré est formaté sous forme de chaîne ASCII codée.

5. Le procédé selon la revendication 1, comprenant en outre :
la réception (412) de la réponse redirigée ; et
la génération (414) d'une deuxième requête pour la ressource protégée (312) ;
l'envoi (416) de la deuxième requête au deuxième domaine (310)n tel qu'identifié par la réponse redirigée.

6. Le procédé selon la revendication 1, comprenant en outre :
la réception (416, 202) d'une requête pour la ressource protégée (312) à un deuxième serveur (418) supportant le deuxième domaine (310), dans lequel la requête de ressource protégée (312) au deuxième serveur (418) comprend le jeton d'authentification préliminaire chiffré ;
déchiffrer (422, 220) le jeton d'authentification préliminaire chiffré provenant de la requête pour la ressource protégée (312) au deuxième serveur (418), pour générer un jeton d'authentification préliminaire déchiffré ; et
récupérer (424, 222) l'information d'identité utilisateur pour l'utilisateur, à partir du jeton d'authentification préliminaire déchiffré.

7. Le procédé selon la revendication 6, comprenant en outre :
l'authentification (430, 216) de l'utilisateur au deuxième domaine (310) en se basant sur l'information d'identité utilisateur récupérée.

8. Le procédé selon la revendication 6, comprenant en outre :
la fourniture (208) d'un accès à la ressource protégée (312) dans le deuxième domaine (310) d'après l'information d'identité utilisateur récupérée.

9. Le procédé selon la revendication 6, comprenant en outre :
le mappage (426) de l'information d'identité utilisateur récupérée à une identité utilisateur dans le deuxième domaine (310), dans lequel l'utilisateur a été antérieurement enregistré avec une identité utilisateur dans le deuxième domaine (310).

10. Le procédé selon la revendication 9, comprenant en outre :
l'authentification (430, 126) de l'utilisateur au deuxième domaine (310), d'après l'identité utilisateur dans le deuxième domaine (310).

11. Le procédé selon la revendication 9, comprenant en outre :
la fourniture (208) d'un accès à la ressource protégée (312), dans le deuxième domaine (310), d'après l'identité d'utilisateur dans le deuxième domaine (310).

12. Un dispositif d'authentification d'un utilisateur dans un système de traitement de données distribué, le dispositif comprenant :
des premiers moyens de réception pour recevoir (408) une requête pour une ressource protégée (310) à un premier serveur (404) supportant un premier domaine (340) depuis un client (402) de la part d'un utilisateur, dans lequel le premier domaine (340) est un membre d'un groupe de domaines (300), dans lequel l'utilisateur a été antérieurement authentifié au premier serveur (404), et dans lequel l'utilisateur a été antérieurement enregistré avec une identité utilisateur dans le premier domaine (340) :
des moyens de détermination pour déterminer si ou non la ressource protégée requise est située dans un deuxième domaine (310), dans lequel le deuxième domaine (310) est un membre du groupe de domaines (300) ;
des premiers moyens de génération pour générer (410), en réponse à une détermination du fait que la ressource protégée (312) requise est située dans un deuxième domaine (310), un jeton d'authentification préliminaire au premier serveur (404), dans lequel le jeton d'authentification préliminaire comprend une information d'identité utilisateur pour l'utilisateur ;
**caractérisé par le fait que** le dispositif comprend en outre :
des premiers moyens de chiffrement pour chiffrer (410) le jeton d'authentification préliminaire ;
des premiers moyens d'insertion pour insérer (412) le jeton d'authentification préliminaire chiffré dans une réponse de redirection ;
des deuxièmes moyens d'insertion pour insérer (412) un Idendificateur Uniformisé de Ressource URI de redirection provenant pour le deuxième domaine dans la réponse de redirection ; et
des premiers moyens d'envoi pour envoyer (412) la réponse de redirection au client (402).

13. Le dispositif selon la revendication 12, comprenant
des troisièmes moyens d'insertion pour insérer (410) une estampille temporelle dans le jeton d'authentification préliminaire.

14. Le dispositif selon la revendication 12, comprenant en outre :
des quatrièmes moyens d'insertion pour insérer (410) un identificateur pour le premier domaine (340) dans le jeton d'authentification préliminaire.

15. Le dispositif selon la revendication 12, comprenant en outre :
des deuxièmes moyens de réception pour recevoir (412) la réponse de redirection ; et
des deuxièmes moyens de génération pour générer (414) une deuxième requête pour la ressource protégée (312) ;
des deuxièmes moyens d'envoi pour envoyer (416) la deuxième requête au deuxième domaine (310) tel qu'identifié par la réponse de redirection.

16. Le dispositif selon la revendication 12, comprenant en outre :
des troisièmes moyens de réception, pour recevoir (416, 202) une requête pour la ressource protégée (312) à un deuxième serveur (418) supportant le deuxième domaine (310), dans lequel la requête pour la ressource protégée (312) au deuxième serveur (418) comprend le jeton d'authentification préliminaire ;
des moyens de déchiffrement pour déchiffrer (422, 220) le jeton d'authentification préliminaire chiffré provenant de la requête pour la ressource protégée (312) au deuxième serveur (418), pour générer un jeton d'authentification préliminaire déchiffré ; et
des moyens de récupération pour récupérer (424, 222) l'information d'identité utilisateur pour l'utilisateur, depuis le jeton d'authentification préliminaire.

17. Le dispositif selon la revendication 12, comprenant en outre :
des premiers moyens d'authentification, pour authentifier (430, 216) l'utilisateur au deuxième domaine (310), d'après l'information d'identité utilisateur récupérée.

18. Le dispositif selon la revendication 16, comprenant en outre :
des premiers moyens de fourniture, pour fournir (208) un accès à la ressource protégée (312) dans le deuxième domaine (310) d'après l'information d'identité utilisateur récupérée.

19. Le dispositif selon la revendication 16, comprenant en outre :
des moyens de mappage, pour mapper (426) l'information d'identité utilisateur récupérée à une identité utilisateur dans le deuxième domaine (310), dans lequel l'utilisateur était antérieurement enregistré avec une identité utilisateur dans le deuxième domaine (310).

20. Le dispositif selon la revendication 19, comprenant en outre :
des deuxièmes moyens d'authentification, pour authentifier (430, 216) l'utilisateur au deuxième domaine (310), d'après l'identité utilisateur dans le deuxième domaine (310).

21. Le dispositif selon la revendication 19, comprenant en outre :
des deuxièmes moyens de fourniture, pour fournir (208) un accès à la ressource protégée (312) dans le deuxième domaine (310), d'après l'identité utilisateur dans le deuxième domaine (310).

22. Un programme pour ordinateur, comprenant des parties de code logiciel, pour mettre en oeuvre un procédé selon l'une quelconque des revendications 1 à 11, lorsque ledit programme fonctionne sur un système informatique.

23. Le programme pour ordinateur selon la revendication 22, stocké sur un support utilisable par un ordinateur.
